# EUROPEAN PATENT APPLICATION

(11) **EP 1 988 126 A1**
(43) Date of publication of application: **05.11.2008**
(21) Application number: 07708331.9
(22) Date of filing: 05.02.2007
(51) Int. Cl.: C08L 101/00, C08J 5/16, C08K 7/14, C08L 77/00

(54) **MATERIAL FOR SLIDE PART**

(30) Priority: 22.02.2006 JP 2006045094; 26.05.2006 JP 2006146337
(71) Applicant: Ube Industries, Ltd., Ube-shi, Yamaguchi-ken 755-8633 (JP)
(72) Inventor: KATAYAMA, Tsutomu, Ube-shi, Yamaguchi 755-8633 (JP); FUKUI, Yasuharu, Ube-shi, Yamaguchi 755-8633 (JP); MIYAMOTO, Akio, Nagoya-shi, Aichi 468-0053 (JP)
(74) Representative: Wössner, Gottfried
(86) International application number: PCT/JP2007/052424
(87) International publication number: WO 2007/097214

(57) **Abstract**

To provide a material for sliding components, which is excellent in low warping property, high limiting PV value, low dynamic friction coefficient and wear resistance. This material is suitably used particularly for components such as gears, pulleys, cams and bearings of automobiles, and machines, and cable housing for supporting a cable (e.g., feed cable, signal cable, optical cable). The material for sliding components comprises a thermoplastic resin composition containing (A) a thermoplastic resin and (B) a glass fiber having a noncircular cross-section with the ratio of the long diameter to the short diameter in the cross-section perpendicular to the length direction being from 1.2 to 10. In the material for sliding components, based on the entire thermoplastic resin composition, the thermoplastic resin (A) accounts for 90 to 30 wt% and the glass fiber (B) having a noncircular cross-section with the ratio of the long diameter to the short diameter in the cross-section perpendicular to the length direction being from 1.2 to 10 accounts for 10 to 70 wt%.

## Description

### TECHNICAL FIELD

The present invention relates to a material for sliding components, which is excellent in slidability and low warping property. More specifically, the present invention relates to a material for sliding components requiring slidability and low warping property, such as automobile gears or pulleys, machines and the like, and cable housing for supporting a cable (e.g., feed cable, signal cable, optical cable).

### BACKGROUND ART

Polyamide resin has excellent properties as an engineering plastic and is widely used in various industrial fields such as automobile, machinery and electric/electronic equipment.

In particular, polyamide resin is excellent in mechanical characteristics and wear resistance, and therefore is being used extensively for sliding components such as gears, cams and bearings.

For the purpose of enhancing sliding characteristics such as self-lubricity and wear resistance or for enhancing the mechanical property such as strength, there has been proposed a technique of blending a solid lubricant such as tetrafluoroethylene and high-density polyethylene and/or a filler such as carbon fiber and glass fiber in the polyamide resin used for these sliding components (see, for example, Japanese Unexamined Patent Publication (Kokai) Nos. 62-185747, 1-110558 and 8-157714).

However, the tetrafluoroethylene or the like used as the solid lubricant needs to be added in a large amount so as to modify the surface of a molded body and expect the sliding performance, which is disadvantageous in that the impact resistance characteristic of the polyamide is impaired.

Carbon fiber is expensive and when blended in a large amount, becomes very expensive. Glass fibers in general having a circular cross-section, when used alone, deteriorates the frictional wear characteristics and needs to be used in combination with the solid lubricant or the like, as a result, the mechanical characteristics are disadvantageously deteriorated.

On the other hand, a technique of improving warpage by reinforcing the polyamide resin with a glass fiber having a flat cross-section in place of a glass fiber having a circular cross-section is disclosed (see, for example, Japanese Unexamined Patent Publication (Kokai) No. 8-259808). However, this patent publication is silent on the slidability.

An object of the present invention is to solve the problems above and provide a material for sliding components, ensuring low warping property, high limiting PV value, low dynamic friction coefficient and excellent wear resistance.

### DISCLOSURE OF THE INVENTION

As a result of intensive studies to attain this object, the present inventors have found that the blending of a glass fiber in general having a circular cross-section causes deterioration of the frictional wear characteristics but in the case of blending a glass fiber having a noncircular cross-section with the ratio of the long diameter to the short diameter in the cross-section perpendicular to the length direction being from 1.2 to 10, the slidability is remarkably improved. The present invention has been accomplished based on this finding.

The present invention relates to a material for sliding components, comprising a thermoplastic resin composition containing (A) a thermoplastic resin and (B) a glass fiber having a noncircular cross-section with the ratio of the long diameter to the short diameter in the cross-section perpendicular to the length direction being from 1.2 to 10.

### BEST MODE FOR CARRYING OUT THE INVENTION

The present invention is described in detail below.

The material for sliding components comprises a thermoplastic resin composition containing (A) a thermoplastic resin and (B) a glass fiber having a noncircular cross-section with the ratio of the long diameter to the short diameter in the cross-section perpendicular to the length direction being from 1.2 to 10.

Examples of the thermoplastic resin (A) which can be used in the present invention include a polyamide (PA) such as nylon 6 and nylon 66, a polycarbonate (PC), an acrylonitrile-butadiene-styrene copolymer (ABS), a polyethylene (PE), a polypropylene (PP), a styreneacrylonitrile copolymer (AS), a polyethylene terephthalate (PET), an acrylic resin such as polymethyl methacrylate (PMMA), a polystyrene (PS), a polybutylene terephthalate (PBT), and a polyphenylene sulfide (PPS). Above all, a polyamide resin excellent in chemical resistance, toughness and the like and also excellent in the reinforcing effect by a glass fiber is preferred.

The polyamide resin includes a polyamide resin composed of a diamine and a dibasic acid, a polyamide resin composed of a lactam or an aminocarboxylic acid, and a polyamide resin composed of a copolymer of two or more members thereof.

The diamine includes an aliphatic diamine such as tetramethylenediamine, hexamethylenediamine, octamethylenediamine, nonamethylenediamine, undecamethylenediamine and dodecamethylenediamine, and a diamine having an aromatic cyclic structure, such as metaxylylenediamine.

The dicarboxylic acid includes an aliphatic diamine such as adipic acid, heptanedicarboxylic acid, octanedicarboxylic acid, nonanedicarboxylic acid, undecanedicarboxylic acid and dodecanedicarboxylic acid, and a dicarboxylic acid having an aromatic cyclic structure, such as isophthalic acid.

The lactam includes lactams having a carbon number of 6 to 12, such as ε-caprolactam, enantolactam, undecanelactam, dodecanelactam, α-pyrrolidone and α-piperidone. The aminocarboxylic acid includes an aminocarboxylic acid having a carbon number of 6 to 12, such as 6-aminocaproic acid, 7-aminoheptanoic acid, 9-aminononanoic acid, 11-aminoundecanoic acid and 12-aminododecanoic acid.

Specific examples of the polyamide resin include polyamide 6, polyamide 66, polyamide 11, polyamide 12, polyamide 610, polyamide 612 and polyamide 6/66.

The polymerization degree of the polyamide resin is not particularly limited, but when 1 g of the polymer is dissolved in 100 ml of 96% concentrated sulfuric acid, the relative viscosity measured at 25°C is preferably from 1.8 to 5.0, more preferably from 2.0 to 3.5. If the relative viscosity exceeds the numerical value as the upper limit above, the processability is seriously impaired, whereas if it is less than the lower limit, the mechanical strength disadvantageously decreases.

In the glass fiber (B) having a noncircular cross-section for use in the present invention, in view of low warping property and dynamic characteristics, the ratio of the long diameter to the short diameter in the cross-section perpendicular to the length direction is from 1.2 to 10, preferably from 1.5 to 6, more preferably from 1.7 to 4.5. Here, the long diameter is a maximum linear distance between arbitrary two points on the cross-sectional figure, and the short diameter is a maximum distance between two points crossing with the cross-sectional figure out of straight lines orthogonal to the long diameter.

The glass fiber (B) having a noncircular cross-section is not particularly limited in its cross-sectional shape as long as it has a predetermined ratio between the long diameter and the short diameter, but a glass fiber having a cross-section in the form of eyebrow, oval, semicircle, arc, rectangle, parallelogram, or similar shape thereof is usually used. In practice, in view of flowability, dynamic characteristics and low warping property, an eyebrow shape, an oval shape and a rectangular shape are preferred. The fiber length is usually from 1 to 15 mm, preferably from 1.5 to 12 mm, more preferably from 2 to 6 mm. Also, for the purpose of enhancing the dispersibility and adherence in the polyamide resin, the glass fiber is preferably surface-treated with a silane coupling agent, a titanium coupling agent or other high-molecular or low-molecular surface treating agents.

The blending ratio of the glass fiber (B) having a noncircular cross-section is preferably from 10 to 70 wt%, more preferably from 15 to 60 wt%, based on the entire thermoplastic resin composition. If the blending ratio is too small, the mechanical strength and slidability are not fully satisfied, whereas if it is excessively large, the flowability is disadvantageously worsened.

In the thermoplastic resin composition for use in the present invention, other components, for example, function-imparting agents such as plasticizer, impact-resistant material, heat-resistant material, foaming agent, weatherproofing agent, crystal nucleating agent, crystallization accelerator, releasing agent, lubricant, antistatic agent, flame retardant, flame retardant aid, pigment and dye, may be appropriately blended within the range not impairing the effects of the present invention.

The material for sliding components of the present invention is produced by melt-kneading (A) a plasticizer and (B) a glass fiber having a noncircular cross-section with the ratio of the long diameter to the short diameter in the cross-section perpendicular to the length direction being from 1.2 to 10, in a single-screw or twin-screw extruder, a Banbury mixer or the like. The obtained material for sliding components is molded, whereby a sliding component can be formed. Examples of the molding method which can be employed include an extrusion molding method, a blow molding method and an injection molding method.

The material for sliding components of the present invention is used for a sliding component, particularly, a gear, a pulley, a cam, a bearing, a cable housing and the like of automobiles and machines, but may be used for other components requiring the same functions.

### EXAMPLES

The present invention is described in greater detail below by referring to Examples and Comparative Examples, but the present invention is not limited to these Examples.

The methods for measuring physical properties of the resins and molded articles used in Examples and Comparative Examples are as follows.

### (1) Tensile Strength and Tensile Fracture Strain

A test was performed according to ISO 527-1,2 at ordinary temperature by using a 4 mm-thick specimen at a tensile speed of 5 mm/min (n=5).

### (2) Tensile Modulus

A test was performed according to ISO 527-1,2 at ordinary temperature by using a 4 mm-thick specimen at a tensile speed of 1 mm/min (n=5).

### (3) Charpy Impact Strength

An edgewise impact test was performed according to ISO 179-1 at ordinary temperature by using a 4 mm-thick specimen with A notch (n=10).

### (4) Load Deflection Temperature

This was evaluated by means of a load deflection temperature measuring apparatus according to ASTMD 648 by using a specimen of 12.7 mm in thickness and width and 127 mm in length.

### (5) Warpage Amount

An ISO 294-3 type D1 mold (60×60×1 t) was molded under the following molding conditions, immediately gate-cut and then left standing in a moisture-proof container for 48 hours, and the maximum gap from the stool when a weight is placed at a specified corner on the stool was taken as the warpage amount (n=5).

Molten resin temperature: 290°C, mold temperature: 80°C, average injection speed in mold: 250 mm/sec, pressure maintained: 60 MPa×15 sec, and cooling time: 10 sec.

### (Evaluation of Slidability)

### (1) Limiting PV Value

This was evaluated by a ring-on-ring system (ring used on the other side: S45C, #1000 finish) using a Suzuki-type frictional wear tester according to JIS K7218 except for the test load and the test speed. The test speed was 200 mm/sec, the test load was 10 Kgf at the start and increased in steps of 10 Kgf every 10 minutes, and the value was calculated from the load immediately before the test load under which the specimen was melted.

### (2) Dynamic Friction Coefficient

This was evaluated in the same manner as above.

### (3) Wear Amount

An operation of alternately applying test loads of 1 Kgf and 2 Kgf every 10 minutes, that is, 1 Kgf at the start, 2 Kgf after 10 minutes and 1 Kgf after 10 minutes thereof, was repeated, and the wear amount was evaluated after 200 minutes. Others were the same as above.
Polyamide Resin:
PA6: Polyamide 6 (1015B, produced by Ube Industries, Ltd.)
Glass Fiber:
GF1: Glass fiber having an oval cross-sectional shape (CSG3PA-820, produced by Nitto Boseki Co., Ltd.), ratio of long diameter to short diameter: 4, fiber diameter: 7x28 µm
GF2: Glass fiber having a circular cross-sectional shape (ECS03T249H, produced by Nippon Electric Glass Co., Ltd.), ratio of long diameter to short diameter: 1, fiber diameter: 10.5 µm

### Examples 1 and 2 and Comparative Examples 1 and 2:

The polyamide resin and glass fiber shown in Table 1 were melt-kneaded by a twin-screw kneader TEX44HCT to prepare a pellet of the objective polyamide resin composition.

The obtained pellet was injection-molded at a cylinder temperature of 290°C and a mold temperature of 80°C to produce various specimens, and various physical properties were evaluated. The results obtained are shown in Tale 1.

**Table 1**

| | | | Example | | Comparative Example | |
|---|---|---|---|---|---|---|
| | | | 1 | 2 | 1 | 2 |
| Polyamide resin | PA6 | wt% | 85 | 70 | 85 | 70 |
| Glass fiber | GF1 | wt% | 15 | 30 | | |
| | GF2 | wt% | | | 15 | 30 |
| Tensile strength | | MPa | 120 | 172 | 131 | 181 |
| Tensile fracture strain | | % | 2.6 | 2.9 | 3 | 3.5 |
| Tensile modulus | | GPa | 6.11 | 9.40 | 6.15 | 9.54 |
| Charpy impact strength | | KJ/m² | 8.6 | 15.2 | 7.4 | 13.8 |
| Warpage amount | | mm | 2.0 | 0.8 | 4.8 | 4.3 |
| Limiting PV value | | Kg/cm²·cm/s | 867 | 1000 | 450 | 533 |
| Dynamic friction coefficient | | - | 0.20 | 0.16 | 0.34 | 0.32 |

### INDUSTRIAL APPLICABILITY

The material for sliding components obtained in the present invention is excellent in the low warping property, high limiting PV value, low dynamic friction coefficient and wear resistance, is used for a component requiring slidability and is suitably used particularly for gears, pulleys, cams, bearings, a cable housing and the like.

## Claims

1. A material for sliding components, comprising a thermoplastic resin composition containing (A) a thermoplastic resin and (B) a glass fiber having a noncircular cross-section with the ratio of the long diameter to the short diameter in the cross-section perpendicular to the length direction being from 1.2 to 10.

2. The material for sliding components as claimed in claim 1, wherein based on the entire thermoplastic resin composition, the thermoplastic resin (A) accounts for 90 to 30 wt% and the glass fiber (B) having a noncircular cross-section with the ratio of the long diameter to the short diameter in the cross-section perpendicular to the length direction being from 1.2 to 10 accounts for 10 to 70 wt%.

3. The material for sliding components as claimed in claim 1, wherein the thermoplastic resin (A) is a polyamide resin.

4. A component obtained by molding the material for sliding components claimed in claims 1 to 3.

5. The component as claimed in claim 4, wherein the component is an automotive component.
